Europäisches Patentamt

European Patent Office

Office européen des brevets

(19)

(11) Veröffentlichungsnummer: **0 081 619**
**B1**

(12) **EUROPÄISCHE PATENTSCHRIFT**

(45) Veröffentlichungstag der Patentschrift:
**10.04.85**

(51) Int. Cl.⁴: **F 28 D 13/00, F 22 B 31/00,**
**F 23 C 11/02, B 01 J 8/24**

(21) Anmeldenummer: **82100252.4**

(22) Anmeldetag: **15.01.82**

(54) **Wärmeübertrager mit Wirbelbettfeuerung.**

(30) Priorität: **10.12.81 CH 7886/81**

(43) Veröffentlichungstag der Anmeldung:
**22.06.83 Patentblatt 83/25**

(45) Bekanntmachung des Hinweises auf die Patenterteilung:
**10.04.85 Patentblatt 85/15**

(84) Benannte Vertragsstaaten:
**BE DE FR**

(56) Entgegenhaltungen:
**DE - A - 2 850 536**
**GB - A - 1 525 222**
**GB - A - 2 025 014**
**US - A - 4 177 765**

(73) Patentinhaber: **GEBRÜDER SULZER AKTIENGESELLSCHAFT, Zürcherstrasse 9, CH-8401 Winterthur (CH)**

(72) Erfinder: **Schenk, Hans-Rudolf, Im Morgentau 15b, CH-8408 Winterthur (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

## Beschreibung

Die Erfindung betrifft einen Wärmeübertrager nach dem Oberbegriff des Anspruchs 1. Fällt bei einer Störung die Luftzufuhr zur Wirbelbettfeuerung aus, so bricht das Wirbelbett zusammen und bildet ein dichtes Haufwerk. Infolge der anschliessend auftretenden unterschiedlichen Wärmedehnungen des Haufwerks und der Wärmeübertrager-Heizflächen werden auf diese Heizflächen erhebliche Horizontalkräfte ausgeübt, die zur Deformation oder gar zum Bruch der Heizflächen und/oder von deren Aufhängung führen können.

Es ist Aufgabe der Erfindung, die Gefahr einer Zerstörung der Wärmeübertrager-Heizflächen und/oder von deren Aufhängung bei einem Ausfall der Luftzufuhr zu beseitigen.

Diese Aufgabe wird erfindungsgemäss durch die Merkmale des Kennzeichens des Anspruchs 1 gelöst. Durch das Absenken des Zwischenbodens und damit des Wirbelbettes können auf die Wärmeübertrager-Heizflächen keine Horizontalkräfte ausgeübt werden, so dass die Gefahr einer Zerstörung der Heizflächen auf einfache und zuverlässige Weise behoben ist.

Aus der GB-A Nr. 2025014 ist eine Wirbelbettfeuerung ohne Zwischenboden bekannt, bei der eine Heizfläche von oben in das Wirbelbett eintaucht, wobei der das Bettmaterial enthaltende Behälter und die Heizfläche relativ zueinander in vertikaler Richtung bewegbar sind, um den Wärmeübergang vom Bettmaterial auf die Heizfläche rasch verändern zu können. Vorzugsweise soll bei feststehender Heizfläche der Behälter auf- und abbewegbar sein, wozu hydraulische Zylinder auf der Behälterunterseite vorgesehen sind. In welcher Art die Luftzufuhr zum Wirbelbett ausgebildet sein soll, ist der GB-A nicht zu entnehmen. Gegenüber der Feuerung nach der GB-A Nr. 2025014 hat die erfindungsgemässe Lösung noch den Vorteil, dass die Mediumzufuhr zur Heizfläche auch von der Seite her durch die Behälterwand hindurch erfolgen kann. Dadurch lassen sich auch in dem Raum oberhalb des Wirbelbettes mehr Heizflächen unterbringen als bei der bekannten Anordnung. Eine Wasserkühlung der das Wirbelbett umgebenden Behälterwände lässt sich konstruktiv einfacher realisieren, und die zu bewegende Masse ist beträchtlich kleiner als bei der bekannten Feuerung.

Durch die Weiterbildung der Erfindung nach Anspruch 2 wird vermieden, dass der sich absenkende Zwischenboden sich schrägstellen und verklemmen kann, da die Kolben der Zylinder über den Zwischenboden verteilt an diesem angreifen.

Nach Anspruch 3 wird auf einfache Weise der Luftdruck, oder ggf. auch seine zeitliche Ableitung, als Kriterium für den Ausfall der Luftzufuhr verwendet.

Die Abwandlung nach Anspruch 4 bringt den besonderen Vorteil mit sich, dass der Fühler weniger einer Verschmutzung ausgesetzt ist als der nach Anspruch 3.

Zwei Ausführungsbeispiele der Erfindung werden nun anhand der Zeichnung näher erläutert. Es zeigen:

Fig. 1 einen schematisierten Vertikalschnitt durch eine einfache Wirbelbettfeuerung mit Wärmeübertrager nach der Erfindung, und

Fig. 2 einen schematisierten Vertikalschnitt durch eine Doppelwirbelbettfeuerung.

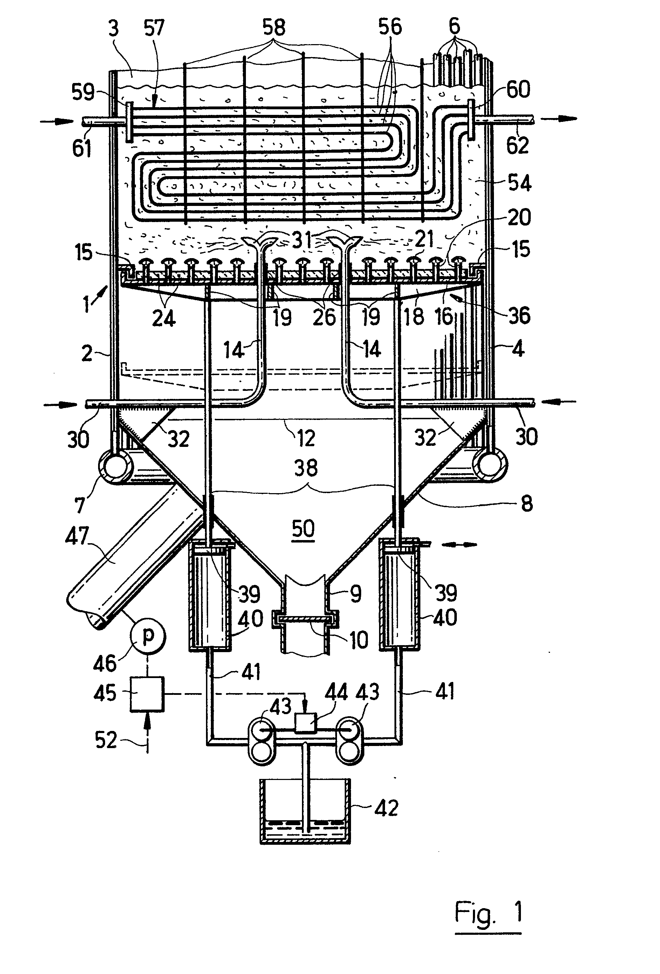

Gemäss Fig. 1 ist eine Brennkammer 1 mit rechteckigem Grundriss von vier ebenen Wänden begrenzt, von denen nur die Wände 2, 3, 4 in der Zeichnung sichtbar sind. Die vier Wände bestehen aus vertikalen, nebeneinander angeordneten Flossenrohren 6, die zu dichten Wänden zusammengeschweisst sind. Die Flossenrohre 6 gehen von einem unteren rechteckigen Ringkollektor 7 aus. Etwas oberhalb des Ringkollektors 7 ist an den vier Brennkammerwänden der Rand 12 eines pyramidenförmigen Blechbodens 8 angeschweisst; das untere Ende des Bodens ist als Stutzen 9 ausgebildet, in dem ein Schieber 10 beweglich angebracht ist. Oberhalb des Randes 12 ist an jeder Brennkammerwand ein L-Profileisen 15 so angeschweisst, dass sein freier Schenkel 15 nach unten gerichtet ist. Die vier Profileisen 15 bilden zusammen einen horizontalen Rahmen. An der Unterkante der freien Schenkel der Profileisen 15 steht eine horizontale Bodenplatte 16 eines Zwischenbodens 36 im Anschlag, die an ihrer Unterseite durch mehrere Längsrippen 18 und mehrere Querrippen 19 versteift ist. Die Bodenplatte 16 wird von einer Vielzahl von rohrförmigen Luftdüsen 20 durchdrungen, deren obere Enden mit je einer Kappe 21 abgeschirmt sind. Im weiteren wird die Bodenplatte 16 von Manschetten 26 durchdrungen, in denen vertikale Abschnitte 14 von Brennstoffzufuhrrohren 30 geführt sind. Die Bodenplattenfläche zwischen den Luftdüsen 20 und den Manschetten 26 ist mit feuerfesten Steinen 24 ausgelegt.

Die Brennstoffzufuhrrohre 30 durchdringen horizontal die Brennkammerwände 2 und 4 und sind durch im Blechboden 8 eingeschweisste, konsolenartige Blechplatten 32 abgestützt. An ihrem oberen Ende 31 sind die vertikalen Abschnitte 14 der Rohre 30 gegabelt und schräg abgeschnitten, so dass die Austrittsöffnungen nach oben abgeschirmt sind.

Der aus der Bodenplatte 16 mit den Rippen 18 und 19 und den feuerfesten Steinen 24 gebildete Zwischenboden 36 wird von vier vertikalen Schubstangen 38 getragen, von denen in der Zeichnung nur zwei zu sehen sind. Jede Schubstange ist unten an einem Kolben 39 befestigt, der in einem vertikalen Hydraulikzylinder 40 verschiebbar ist. Diese vier Zylinder 40 sind von unten her über vier Leitungen 41 und vier gleiche Pumpen 43 mit Drucköl beaufschlagt, das aus einem Behälter 42 angesaugt wird. Die vier Pumpen 43, beispielsweise Zahnradpumpen, sitzen auf derselben Welle eines Elektromotors 44, der von einem Steuergerät 45 aus in der einen oder anderen Drehrichtung in Betrieb gesetzt werden kann.

Das Steuergerät 45 ist mit einem Druckfühler 46 verbunden, der an einer Luftzufuhrleitung 47 angeschlossen ist. Diese Luftzufuhrleitung 47 kommt von einem nicht gezeichneten Gebläse und führt in einen Luftkasten 50, der unten durch den trichterförmigen Boden 8, oben durch den Zwischenboden 36 und seitlich durch die vier Brennkammerwände begrenzt ist. Das Steuergerät 45 ist so ausgebildet, dass, wenn der Druck p in der Luftzufuhrleitung 47 innerhalb eines vorgegebenen Zeitintervalls von einem oberen Normalbetrag auf einen unteren Grenzbetrag fällt, der Motor 44 so in Betrieb gesetzt wird, dass das Drucköl aus den vier Zylindern 40 über die Pumpen 43 gleichmässig in den Behälter 42 zurückfliesst, bis die Kolben 39 am unteren Ende der Zylinder anstehen. Über eine Signalleitung 52 kann dem Steuergerät 45 ein Signal gegeben werden, auf das hin der Motor 44 in umgekehrter Drehrichtung eingeschaltet, wird, so dass mittels der Pumpen 43 Drucköl aus dem Behälter 42 in die Zylinder 40 gefördert wird, bis die Kolben 39 in ihre obere Lage gelangt sind, in der die Bodenplatte 16 des Zwischenbodens 36 an den Profileisen 15 anliegt.

Wie aus Fig. 1 ersichtlich, befindet sich oberhalb des Zwischenbodens 36 ein Wirbelbett 54, in dem aus mäanderförmig verlaufenden Rohren 56 gebildete Heizflächen 57 angeordnet sind, die an Tragrohren 58 aufgehängt sind. Die Heizflächen 57, von denen in Fig. 1 nur eine zu sehen ist, sind über Verteiler 59 und Sammler 60 an eine Zufuhrleitung 61 für ein zu erwärmendes Medium bzw. eine Abfuhrleitung 62 angeschlossen. Der Inhalt des Wirbelbettes 54 besteht aus einem sandartigen Grundmaterial als grösstem Anteil, einem kleinen Anteil an Brennstoff, vorzugsweise in Form von Kohlekörnern, und ggf. einem Anteil an einem körnigen Zuschlagstoff, beispielsweise Kalk, welche Stoffe durch eingeblasene Luft fluidisiert, d. h. angehoben und in wirbelnde Bewegung versetzt werden.

Die Anlage funktioniert wie folgt:

Im Normalbetrieb befindet sich der Zwischenboden 36 in der gezeichneten Stellung und wird durch den von unten an den Kolben 39 anstehenden Öldruck in dieser Lage gehalten. Von dem nicht gezeichneten Gebläse wird Luft über die Luftleitung 47 in die Luftkammer 50 geblasen, aus der die Luft über die Luftdüsen 20 in das Wirbelbett 54 gelangt und die in diesem befindlichen, körnigen Bestandteile fluidisiert. Dies geschieht bei einer Temperatur von rund 800° C, bei der der Brennstoff mit dem Sauerstoff der Luft chemisch reagiert und verbrennt. Die bei der Verbrennung freiwerdende Wärme wird durch die wirbelnde Bewegung des Gutes sehr gleichmässig in der gesamten Gutmenge verteilt und an das in den Heizflächen 57 und in den Wänden der Brennkammer 1 strömende Medium, z. B. Wasser, übertragen. Der Brennstoff wird über die Brennstoffzufuhrrohre 30 in das Wirbelbett 54 eingeblasen und darin, infolge der dort herrschenden Turbulenz, schnell und gleichmässig verteilt.

Fällt aus irgendeinem Grunde, beispielsweise wegen Stromausfalls, die Luftzufuhr in die Luftkammer 50 aus, so wird die Brennstoffzufuhr abgestellt, und das Wirbelbett 54 bricht zu einem

Haufwerk zusammen. Gleichzeitig senkt sich unter der Wirkung des Steuergerätes 45 und der von diesem beeinflussten Teile (Elektromotor 44 und Pumpen 43) der Zwischenboden 36 in die gestrichelt gezeichnete, untere Stellung, wobei die Heizflächen 57 aus dem Haufwerk austreten.

Mit dem Absenken des Zwischenbodens 36 wird vermieden, dass wegen unterschiedlicher Wärmedehnungen beim Abkühlen des Zwischenbodens 36 einerseits und der Brennkammerwände andererseits vom Haufwerk Horizontalkräfte auf die Heizflächen 57 ausgeübt werden, was zu deren Deformation oder sogar Bruch führen könnte.

Es ist möglich, dass beim Absenken des Zwischenbodens 36 wegen des Spiels zwischen dem Umfang des Zwischenbodens 36 und den Brennkammerwänden Material aus dem Wirbelbett in die Luftkammer 50 fallen kann. Auch durch die Luftdüsen 20 oder durch die Manschetten 26 kann Bettmaterial in die Luftkammer 50 fallen. Es kann sich auch als notwendig erweisen, bei abgesenktem Zwischenboden 36 Bettmaterial im Bereich des Umfanges des Zwischenbodens 36 über das genannte Spiel oder über zusätzliche, nicht gezeichnete, verschliessbare Öffnungen im Zwischenboden 36 in die Luftkammer 50 abzulassen, um die Randpartie des Zwischenbodens zum Erzielen einer guten Dichtung mit den Profileisen 15 freizulegen. Das sich auf diese Weise in der Luftkammer 50 sammelnde Bettmaterial kann mit Hilfe des Schiebers 10 im Stutzen 9 leicht nach unten ausgetragen werden.

Um die Wirbelbettfeuerung wieder in Betrieb zu setzen, wird über die Signalleitung 52 dem Steuergerät 45 ein Signal zugeführt, durch das der Elektromotor 44 die Pumpen 43 derart antreibt, dass die Kolben 39 durch das Drucköl gleichmässig angehoben werden, bis der Zwischenboden 36 an den Profileisen 15 dichtend anliegt. Ggf. wird während dieser Operation bereits Luft in die Luftkammer 50 geblasen und das Bettmaterial fluidisiert, wobei gleichzeitig die Dichtungsstellen am Umfang des Zwischenbodens 36 freigeblasen werden, so dass einem Anliegen der Bodenplatte 16 an den abwärtsgerichteten Schenkeln der Profileisen 15 nichts mehr im Wege steht. Nachdem nun der Zwischenboden 26 wieder hochgefahren ist, wird auf konventionelle Weise der Brennstoff im Bettmaterial gezündet und ggf. das Wirbelbett auf Normalhöhe gebracht.

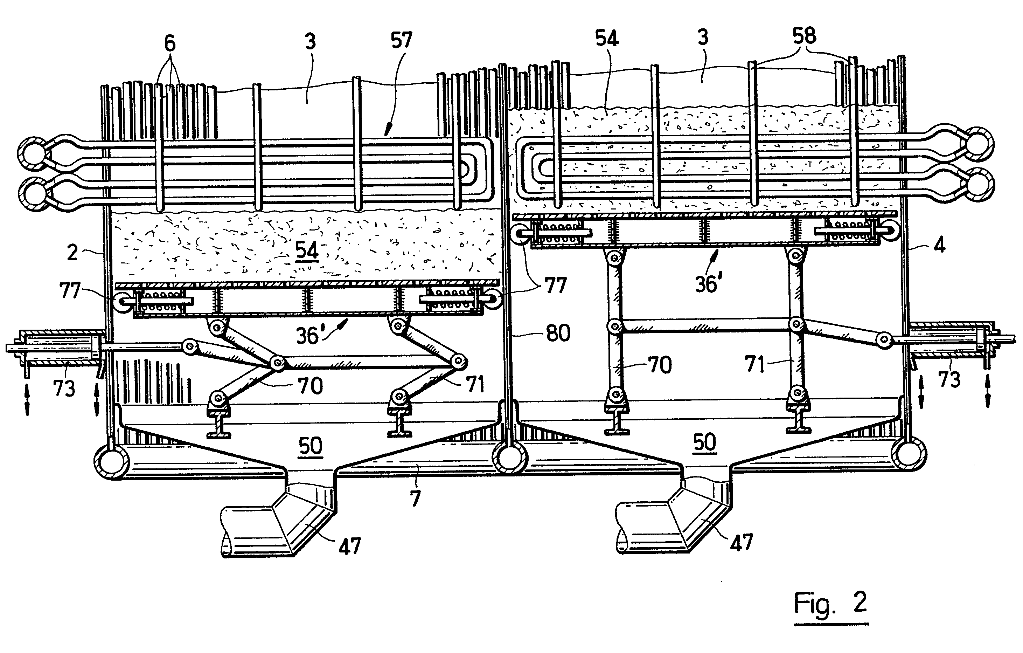

Bei der Ausführungsform nach Fig. 2 sind in einem Wärmeübertrager zwei Wirbelbettfeuerungen nebeinander vorgesehen. Dementsprechend sind zwei Luftkammern 50 vorhanden, die durch eine vertikale Rohrwand 80 aus Flossenrohren voneinander getrennt sind, die auch die beiden Wirbelbetten trennt. Die Zwischenböden 36' sind hier über Kniehebel 70, 71 abgestützt, die durch an den Wänden 2 und 4 angebrachte ölhydraulische Servomotoren 73 betätigt werden. Die seitliche Führung der Zwischenböden 36' geschieht durch Rollen 77, die an den Brennkammerwänden federnd anliegen und in den Zwischenböden verschiebbar gelagert sind. Im durchgestreckten Zustand der Kniehebel 70, 71 verteilen die Rollen 77 das Spiel jedes Zwischenbodens 36' in bezug auf die umgebenden Brennkammerwände gleichmässig über den Umfang der Brennkammer.

## Patentansprüche

1. Wärmeübertrager mit Wirbelbettfeuerung, die einen zwischen einer Luftkammer (50) und einem Wirbelbett (54) angeordneten Zwischenboden (36, 36') aufweist, der mit Luftdurchtrittsöffnungen versehen ist, wobei über dem Zwischenboden (36, 36') und in dem Wirbelbett (54) Wärmeübertrager-Heizflächen (57) angeordnet sind, dadurch gekennzeichnet, dass der Zwischenboden (36, 36') absenkbar ausgebildet und mit Mitteln (38, 39, 40, 41, 42; 70, 71, 73) zum Absenken verbunden ist und dass diese Mittel mit Steuermitteln (43, 44, 45) in Verbindung stehen, die so ausgebildet sind, dass bei einem Ausfall der Lufteinspeisung in das Wirbelbett (54) die Mittel (38 bis 42; 70, 71, 73) den Zwischenboden (36, 36') so weit absenken, dass die Heizflächen (57) aus dem Wirbelbett austreten.

2. Wärmeübertrager nach Anspruch 1, dadurch gekennzeichnet, dass die Mittel (38 bis 42; 70, 71, 73) zum Absenken des Zwischenbodens (36) mehrere, miteinander gekuppelte Hydraulikzylinder (40) aufweisen.

3. Wärmeübertrager nach einem der Ansprüche 1 oder 2, dadurch gekennzeichnet, dass die Steuermittel (43, 44, 45) mit einem Fühler (46) für den Luftdruck in der Luftkammer (50) verbunden sind.

4. Wärmeübertrager nach einem der Ansprüche 1 oder 2, dadurch gekennzeichnet, dass die Steuermittel mit einem Fühler für die Drehzahl eines Gebläses verbunden sind, das Luft in die Luftkammer fördert.

## Claims

1. A heat exchanger with fluidized bed firing comprising a sub-floor (36, 36') disposed between an air chamber (50) and a fluidized bed (54), said sub-floor being formed with air passage apertures, heat-exchanger heating surfaces (57) being disposed above the sub-floor (36, 36') and in the fluidized bed (54), characterized in that the sub-floor (36, 36') is lowerable and provided with lowering means (38, 39, 40, 41, 42; 70, 71, 73) and said means are connected to control means (43, 44, 45) so constructed that in the event of any failure of air feed to the fluidized bed (54) the means (38 to 42; 70, 71, 73) lower the sub-floor (36, 36') until the heating surfaces (57) emerge from the fluidized bed.

2. A heat exchanger according to Claim 1, characterized in that the means (38 to 42; 70, 71, 73) for lowering the sub-floor (36) comprise a plurality of interconnected hydraulic cylinders (40).

3. A heat exchanger according to Claim 1 or 2, characterized in that the control means (43, 44, 45) are connected to a sensor (46) for the air pressure in the air chamber (50).

4. A heat exchanger according to Claim 1 or 2, characterized in that the control means are connected to a sensor for the speed of a fan delivering air to the air chamber.

## Revendications

1. Transmetteur de chaleur à foyer à lit tourbillonnaire présentant un fond intermédiaire (36, 36') intercalé entre une chambre à air (50) et un lit tourbillonnaire (54) et percé d'orifices de sortie d'air, des surfaces chauffantes (57) du transmetteur de chaleur étant disposées au-dessus du fond intermédiaire (36, 36') et dans le lit tourbillonnaire (54), caractérisé par le fait que le fond intermédiaire (36, 36') est réalisé abaissable et est relié à des moyens (38, 39, 40, 41, 42; 70, 71, 73) assurant son abaissement, et par le fait que ces moyens sont reliés à des moyens de commande (43, 44, 45) réalisés de telle sorte que, en cas de défaillance de l'alimentation en air du lit tourbillonnaire (54), les moyens (38 à 42; 70, 71, 73) abaissent le fond intermédiaire (36, 36') jusqu'à ce que les surfaces chauffantes (57) sortent de ce lit tourbillonnaire.

2. Transmetteur de chaleur selon la revendication 1, caractérisé par le fait que les moyens (38 à 42; 70, 71, 73) pour abaisser le fond intermédiaire (36) présentent plusieurs cylindres hydrauliques (40) accouplés les uns aux autres.

3. Transmetteur de chaleur selon l'une des revendications 1 ou 2, caractérisé par le fait que les moyens de commande (43, 44, 45) sont raccordés à une sonde (46) de la pression de l'air dans la chambre à air (50).

4. Transmetteur de chaleur selon l'une des revendications 1 ou 2, caractérisé par le fait que les moyens de commande sont raccordés à une sonde de la vitesse angulaire d'une soufflerie qui refoule de l'air dans la chambre à air.

Fig. 1

Fig. 2